# EUROPEAN PATENT APPLICATION

(11) **EP 1 936 300 A1**
(43) Date of publication of application: **25.06.2008**
(21) Application number: 06126582.3
(22) Date of filing: 20.12.2006
(51) Int. Cl.: F24J 2/05, F24J 2/42, F24F 3/14, F25B 17/08, F25B 27/00, E03B 3/28, B01D 5/00, B01D 53/26, F24F 5/00

(54) **Water generation from air utilizing solar energy and adsorption refrigeration unit**

(71) Applicant: Al-Maaitah, Ayman Adnan Salim, 11821 Amman (JO)
(72) Inventor: Al-Maaitah, Ayman Adnan Salim, 11821 Amman (JO)
(74) Representative: Cayli, Hülya

(57) **Abstract**

The invention is a water generator device from air utilizing solar thermal energy and adsorption principle. The system is based on an adsorption refrigeration unit with Ether as a refrigerant and activated carbon as adsorbed. The required heat is generated from evacuated tube solar system and the heat sink is the atmosphere. The adsorption unit is an air-cooled refrigeration unit that can operate at relatively low hot water temperature (60-70°C) and relatively high atmospheric temperature (30-40°C). The water condensed from air is than driven through a simple water purification unit to assure its quality as drinking water. The very small electricity needed to operate the hot water and cold water pumps along with the filtration unit and the controller of the adsorption unit is generated from a small Photo Voltaic (PV) unit for stand alone systems.

## Description

### Technical Field

The present invention relates to a water generator system from air utilizing solar thermal energy and adsorption. The invention specifically concerns the system based on an adsorption refrigeration unit with ether as a refrigerant and activated carbon as adsorbent.

### Background of the Invention

The systems generate water from air are based on the passive desiccant adsorption principle. In these systems humid cold air is passed through a humidity adsorbent and then solar energy is used for repelling the adsorbed water into hot air to increase its humidity content. When the humid air cooled to around atmospheric temperature, condensation occurs. Furthermore there are refrigeration units operating by electricity to provide dehumidification of air. These units utilize the solar photon energy of the sun but these systems are very expensive.

In prior art, some patent applications DE4430902, JP2004232998, RU2230858, US421934 and US2005/103615 are known related to subject. Hereafter, the present application and said prior art documents will be compared. Since the documents DE4430902, JP2004232998, RU2230858, and US421934 are of similar concept and they will be evaluated together. However, US2005/103615 will be evaluated separately since it is of different concept.

The devices and systems in first group of patents (DE4430902, JP2004232998, RU2230858, and US421934) are based on a totally different concept from the present invention. They all depend on the passive desiccant adsorption principle. Their basic principle is to pass humid cold air to a humidity adsorber (celiac gel or similar materials) and then utilize solar heat energy to repel the adsorbed water into hot air hence increasing its humidity content. Later on this humid air is cooled to around atmospheric temperature where condensation would occur. Each patent uses different approach to do this but they are all based on the same basic principle. None of these patents uses an active refrigeration unit to condense water directly from the air. The operating principle of all of these patents differs from the present invention by the following:
1- They all use desiccant adsorption techniques relying on temperature difference between day and night. They do not use an active refrigeration unit like present invention which is independence on the temperature difference between day and night.
2- In these patents, the air flows directly to the adsorber to be dehumidified and then water is repelled from the adsorber utilizing solar energy. In present invention air does not flow into the adsorber but water is extracted from it by cooling it below atmospheric temperature to a limit where condensation occurs. The adsorption principle is applied to the refrigeration unit which can also act as solar cooling unit with some modification.
3- The water extraction by such techniques is limited since it is bounded to cool humid air to atmospheric temperature only. The present invention can cool air to sub-zero temperature hence extracting large portion of its water content even for dry weather.
4- The devices and systems those patents work on a day/night intermittent cycle where water is generated either during the day or during the night (or part of day and night). For example the system in patent DE4430901 extracts water in night but systems in other patents (JP2004232998, RU2230858, and US421934) extract water in day time. The present invention extracts water day or night and at any suitable or needed time.
5- The operation of those patents is limited to low ambient temperature at night and will not work efficiently for high night temperature. The reasons is that desorption is an exothermic process and adsorbent needs to be cooled during this process. Hence, if air is of high temperature the process will not occur. This is especially true for patents DE4430901 and JP2004232998 where very cold air temperature at night is needed while patents RU2230858 and US4219341 can operate at moderate night temperature. The present invention, on the other hand, can operate efficiently at ambient temperature of 40 °C day and night.

Unlike previously discussed patents, the device disclosed in US2005/103615 uses an active refrigeration cycle with Ammonia and Calcium Chloride as the refrigeration pair.

However, the cycle used in this patent is an intermittent day/night cycle (i.e. condensation of refrigerant occurs during the day and evaporation occurs during night). Furthermore, the operation cycle in patent US2005/103615 is totally different from the cycle in the present invention since it does not have a continuous cyclic operation and does not allow for regeneration of residual gas. The cycle in the previous patent is of low efficiency and needs a very high heating temperature (120 °C or 250 °F) which the inventor can only obtain by using parabolic trough or concentrating dish solar collector with tracking mechanism. Furthermore, such high degree of hot temperature can only be obtained in a non- hazy or non-cloudy day for few period of the day.

In contrast to the device disclosed in US2005/103615, the present invention is based on a novel continuous operation adsorption cycle (condensation and evaporation of refrigerant occurs all day and night or whenever needed) with two generators allowing adsorption and de-sorption to occur continuously on consecutive manner. Here, ether-activated carbon refrigerant- adsorbent pair is utilized in a way that heating temperature as low as 60 C can be used. Such low temperature can be obtained by low cost evacuated tubes solar collectors even at hazy or lightly cloudy days and for all period of the day. The stored hot water can be utilized day and night or whenever is most suitable to be used with continuous operation.

As such, the present invention is totally different in form and in principle from that of patent US2005/103615 and has the following advantage on it:
1- The present invention is based on continuous cycle operation with high efficiency. The system disclosed in US2005/103615 is based on day/night intermittent cycle with low efficiency.
2- The present invention needs hot water as low as 60°C which can be obtained with low cost evacuated tube solar collector at various weather conditions. The system in US2005/103615 needs heat at 120°C (250°F) which needs complicated parabolic trough or concentrating dish solar collectors with complicated tracking devices and operates only on shiny days for a portion of the day only.
3- The present invention works efficiently at high ambient temperature day or night (as high as 40°C). The system in US2005/103615 cannot work efficiently at high night ambient temperature because the generator is insulated to allow its temperature to reach 120°C during day, but a complicated heat dissipating mechanism is needed in the night to cool the generator.
4- In the present invention, the solar collectors are not affected much by wind and are of sturdy compact size. The parabolic troughs or the concentrator dishes in US2005/103615 are very much affected by wind due to their large area and wind can seriously affect their concentration point.
5- Simple controller is needed in for present invention while complicated controller is needed for the device in US2005/103615 for tracking system, night cooling effect, and system operation.

### Brief Description of the Invention

The invention is a method for water generation from air utilizing solar thermal energy and adsorption principle; and a system related to said method. The system is based on an adsorption refrigeration unit with Ether as a refrigerant and activated carbon as adsorbed. The required heat is generated from evacuated tube solar system and the heat sink is the atmosphere. The adsorption unit is a novel air-cooled refrigeration unit that can operate at relatively low hot water temperature (60-70°C) and relatively high atmospheric temperature (30-40°C). The water condensed from air is then driven through a simple water purification unit to assure its quality as drinking water. The very small electricity needed to operate the hot water and cold water circulation pumps along with the filtration unit and the controller of the adsorption unit is generated from a small Photo Voltaic (PV) unit for stand alone systems.

### Detailed Description of the Invention

The invention comprises adsorption refrigeration unit based on Ether-Activated Carbon as adsorbent - refrigerant pair. The gas cycle of the adsorption unit comprises two generators especially designed to allow high efficiency for sorption-desorption process at the desired temperatures. Adsorption of Ether into the activated carbon is activated by cooling the generator via the cold water cycle with a regular radiator as heat sink. To cool the cold water below atmospheric temperature, a coil is located between the evaporator and the condenser which is also parts of the cooling cycle. The gas cycle also comprises two on-off valves (i.e., electrically controlled), two three-way valves, and one throttling expansion valve. An evacuated tube solar collector with storage tank and a heat exchanger coil inside provides the heat needed for the hot water cycle. A simple low-power water filtration unit is utilized comprising five stages filtration process, a bump, and two storage tanks. A small PV unit with PV panels, battery storage and regulation system provides the needed electricity of the system. A digital controller is also part of the system needed to control the hot and cold water circulation pump along with the solenoid and three-way valves of the gas cycle.

The adsorption unit utilizes the thermal solar energy into cooling to condense humidity from the air. The operation of its parts will be explained later on. The evacuated tube solar system provides the hot water for the adsorption unit. The radiator provides the heat sink of the system and cools down the cold water. The coil between the evaporator and the condenser lowers the cold water temperature below atmospheric to increase the efficiency of the adsorption process. The water filter process the condensed water from the adsorption unit to eliminate any bacteria which might contain, filter the water, and mineralize it. The PV unit provides the needed little electricity to operate the pumps and the fans and the valves for the system. The controller coordinates the operation of pumps, solenoid valves, and three-way valve to generate the needed sorption and de-sorption process.

The adsorption unit with all of its component and process is new to the invention especially the utilization of Ether and activated carbon pair and the cycle itself. The conventional units are the PV electricity unit, the solar collector unit, the filtration unit and the controller.

For the purpose of system and cycle description this abbreviation explains the symbols of the figures;
- E:: Evaporator
- E.V.:: Expansion Valve
- E.S.C.:: Evacuated Tube Solar Collector
- G1, G2:: Generators
- N1, N2, N3, N4:: Non-Return Valves
- PC:: Cold Water Circulating Pump
- PH:: Hot Water Circulating Pump
- S1, S2:: On-off Valves
- R:: Radiator
- 3W1, 3W2:: three way valves that allow either hot water or cold water to enter the generators
- A.C.:: Accumulation Chamber

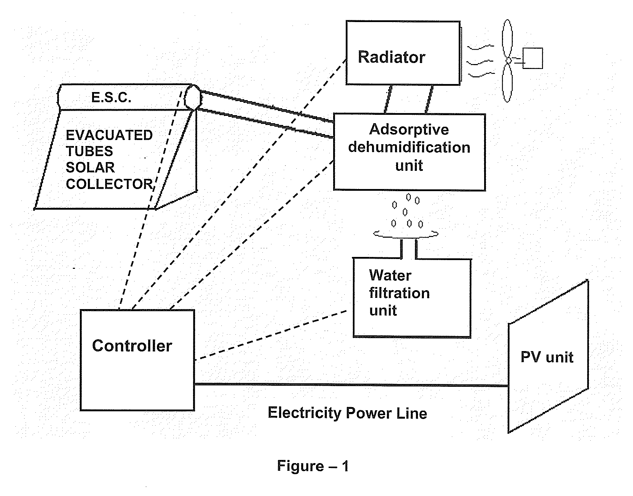

The water generating system from air and all of its main components are demonstrated in figure 1. However, the novel part of the system is the Solar Adsorption Dehumidification unit which will be described in full details later. However, it is convenient to explain the components of the entire system to signify its operation.

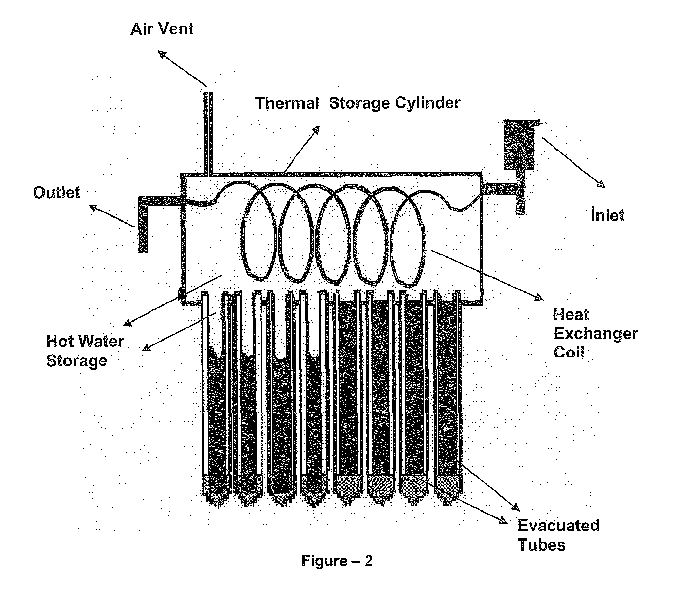

Heat is generated by evacuated tube solar collector (E.S.C.). This collector heats up the hot water needed for the adsorption unit and stores it to be used when suitable. There are many low cost models available in the market and figure 2 shows one of the models which allow water to be heated by passing through a copper coil in the stored heat medium. The adsorption unit is a heat operated refrigeration cycle that will be explained in details later. This unit needs a heat sink like all refrigeration cycles according to the second law of thermodynamics and this heat sink can be a simple radiator to dissipate heat to the atmosphere. The adsorption unit can cool air to very low temperatures (can go down to -5 °C) to condense the humidity in the air and to accumulate that in a container. The humidified water is low with salt and needs little electricity to guarantee its drink-ability. It passes through a simple filtration process that utilizes UV to kill any bacteria that might exist in the condensed water, carbon to remove organic contaminants that causes taste, odor and color problems from water, and mineralizing process. A relatively simple controller is needed to control the operation of the adsorption unit and can be utilized also to monitor the best condition that suitable for operation. In desert arid area, for example, the solar collector can store heat all day and the system will operate during evening time where humidity and temperature are more suitable for system operation. On the other hand, in hot and humid weather conditions the system can operate both day and night continuously. Hence the controller can monitor the humidity and the temperature of the atmosphere and start the dehumidifying process whenever it is suitable. The controller can be a complicated (feed-back) operation that senses the temperature and the pressure of certain locations in the cycle as will be described later or a timer based controller if all conditions are known ahead.

### Principle of Operation of the Adsorption Unit

To explain the principle of operation of the solar adsorption unit, the physical phenomenon behind it and then the step by step operation procedure will be described. After that a detailed description of the generator tank will be described.

### Physical Phenomenon

Adsorption is a well know phenomenon. However, many tests were conducted and they showed that the activated carbon adsorbs Diethyl Ether (C₄H₁₀O) at atmospheric temperature (20-35°C) and desorbs it at 60°C or above. In this invention, this phenomenon is utilized to generate pressure difference suitable to obtain cooling effect hence replacing the compressor in the traditional refrigeration cycle. Basically there are two generators that while one is cooled other is heated allowing for this pressure difference and utilizing it to achieve main goal as described after.

Briefly, in present invention, the system for water generation comprises:
- an adsorption unit, performing a heat operated refrigeration cycle, for water generation by cooling air to condense the humidity in the air and to accumulate that in a container;
- a solar collector with evacuated tubes (E.S.C.) providing the hot water for the adsorption unit;
- a radiator (R), as a heat sink of the system, to dissipate heat to the atmosphere; and providing cold water for the adsorption unit;
- a water filtration unit processing the condensed water from the adsorption unit to eliminate any bacteria which might contain, also filtering and mineralizing the water;
- a hot water circulation pump (PH) for said solar collectors (E.S.C.); a cold water circulation pump (PC) for said radiator (R);
- a controller unit of the system;
- a source of electricity to operate the system.

The source of electricity can be any kind of electric supplier unit; however, it preferably comprises at least a photo-voltaic unit.

The adsorption unit, utilizing ether as refrigerant, of this system comprises;
- two generators (G1, G2), filled with activated carbon as adsorbent, and connected to each other by refrigerant flow line where an on-off valve (S2) is located, said generators (G1, G2) having hot water outlets connected to said circulation pump (PH), cold water outlets connected to said circulation pump (PC), hot and cold water inlets from two three-way valves, and refrigerant inlets and outlets;
- a condenser (C) unit firstly connected to a junction coming from two refrigerant flow lines of non-return valves (N1, N2) which are on outlets of the generators (G1, G2); secondly connected to first on-off valve (S1) whose flow line extends to an expansion valve (EV);
- an evaporator (E) unit firstly connected to the expansion valve (EV); secondly connected to a junction going to two refrigerant flow lines of non-return valves (N3, N4) which are on the other outlets of the generators (G1, G2);
- a fan unit for cold air blowing from the evaporator (E) to the condenser (C);
- two three-way valves (3W1, 3W2) that allow either hot water or cold water to enter the generators (G1, G2); first one (3W1) is connected to first generator (G1), second one is (3W2) is connected to second generator (G2); also both (3W1, 3W2) are either connected to cold water line coming from the radiator (R) or hot water line coming from the solar collector with evacuated tubes (ESC);
- a coil, between condenser (C) and evaporator (E), connected to cold water line coming from the radiator (R); and connected to said three-way valves (3W1, 3W2).

Here, the adsorption unit generates the water from the humidity in the air accumulated on the cooled outer surface of the evaporator (E), by means of the refrigeration cycle in adsorption unit.

### Refrigeration Cycle Operation

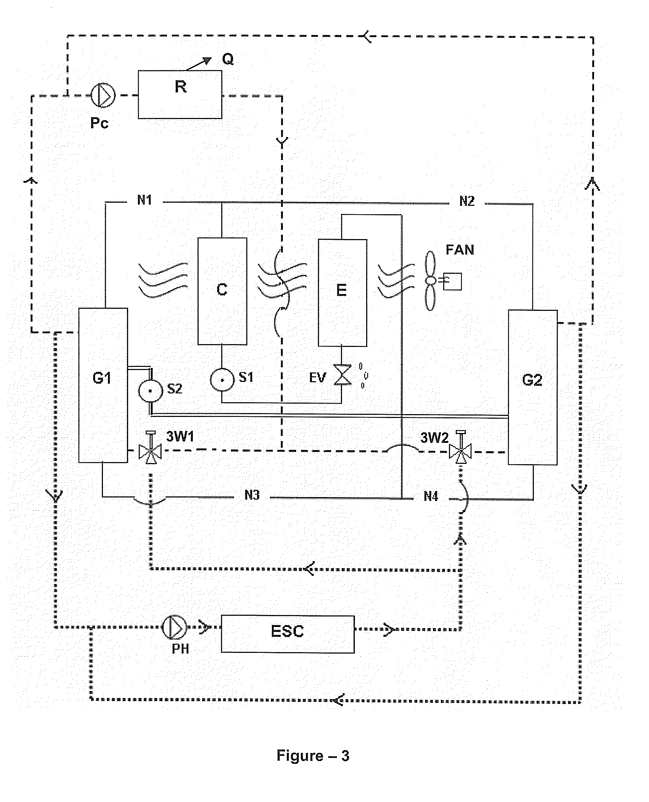

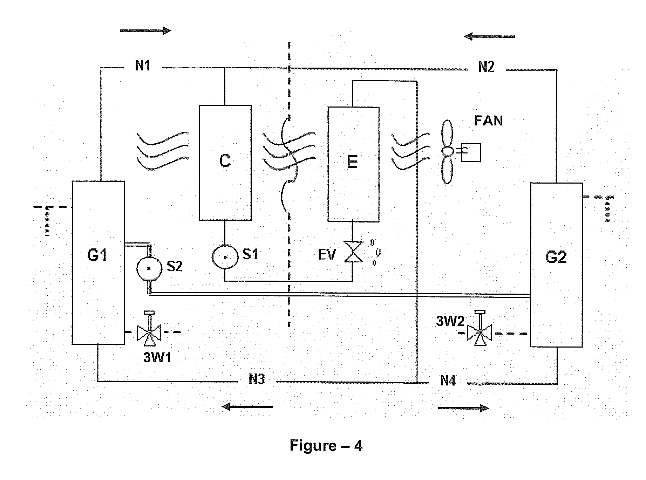

To achieve cooling effect the cycle is basically composed of 3 closed loops cycle as shown in figure 3. The first is the gas cycle drawn in solid lines (with one step in a double solid line), the hot water cycle drawn in dotted line, and the cooling water cycle drawn in dashed line. The hot water is generated from the solar collector (E.S.C.) while the cooling water cools to atmosphere in the radiator R and cools more from the cold air getting out of the evaporator. The abbreviation for each of the components of figure 3 is given above. However, to make it easier for explanation, only the gas cycle extracted and presented in figure 4. Firstly, the continuous cycle operation and then start up operation will be explained.

### Continuous Operation

The continuous operation for this refrigeration cycle is done in 6 steps governed by the controller as follows.

### Step-1-

In this step the first on-off valve (S1) is open and the second (S2) is closed. The hot water pump (PH) and cold water pump (PC) are turned on, the first three way valve (3W1) allows hot water to flow to first generator (G1) (initially filled with refrigerant, ether) while second three way valve (3W2) allows cold water to flow to second generator (G2) that is initially empty (or at low level) of Ether. Since, first generator (G1) is pressurized above the atmospheric pressure (1.1-1.2 bar absolute) due to heat, and then the refrigerant will be desorbed from the activated carbon and flow through the first non return valve (N1). The third non-return valve (N3) prevents the refrigerant from flowing in the other direction and the second non-return valve (N2) prevents the refrigerant from going to second generator (G2) (since it is at vacuum) hence the refrigerant has to go to the condenser (C). In the process the refrigerant will condense in the condenser (C) due to the low temperature of air flowing from the evaporator (E). The refrigerant then flows through the expansion valve (E.V.) evaporates in the evaporator (E) at low temperature depends on the level of condensation needed (up to -5°C can be easily achieved). Gas will then be adsorbed in the second generator (G2).

To summarize this step gas flows from the first generator (G1) through the first non-return valve (N1) to the condenser (C) though the first on-off valve (S1) to the evaporator (E) through the fourth non-return valve (N4) to the second generator (G2).

The length of this step depends on temperature and size of unit. This can be timed in the controller or a feed back controller which senses the pressure at each generator can be used. Air flows through the evaporator which condenses its humidity and lowers the temperature of the cooling water to improve adsorption efficiency.

### Step-2-

The first on-off valve (S1) is closed, the second on-off valve (S2) is open, and the pumps (PH, PC) are turned off. This is an intermediate step to increase the efficiency of the cycle by moving residual gases from the first generator (G1) to the second generator (G2) through the second on-off valve (S2) (double line path shown in figures 3-4). Hence, the first generator (G1) is depressurized and cooled getting ready to adsorption, while the second one (G2) is pressurized and heated getting ready to the desorption process. This step takes time until pressure in both generators (G1, G2) equalizes.

### Step-3-

This also is an intermediate step in which both on-off valves (S1, S2) is closed, the pumps (PH, PC) are turned on, first three way valve (3W1) allows cold water and the second one (3W2) allows hot water. This step takes time until pressure in the first generator (G1) is at vacuum level (0.2 bar absolute) and in the second generator (G2) is above the atmospheric pressure (1.2 bar absolute).

### Step-4-

This step is opposite to step1. The first on-off valve (S1) is open, the second (S2) is closed, the pumps (PH, PC) are turned on, first three-way valve (3W1) allows cold water and the second (3W2) allows hot water. Gas flows from the second generator (G2) through the second non-return valve (N2) to the condenser (C), through the first on-off valve (S1) to the expansion valve (E.V.) to the evaporator (E), through the third non-return valve (N3) to the first generator (G1).

### Step-5-

Same as step 2 where the first on-off valve (S1) is closed, the second on-off valve (S2) is open, the pumps (PH, PC) are turned off. Here, second generator (G2) gets depressurized and the first one (G1) gets pressurized. So pressure is getting equal.

### Step-6-

Opposite to Step 3, the first on-off valve (S1) is closed, the second one (S2) is closed, the pumps (PH, PC) are turned on, the first three-way valve (3W1) allows hot water and the second (3W2) allows cold water.

Then it is come back to step1 and continued the cycle.

### Start-up Operation

At start-up both generators are at atmospheric temperature and of equal vacuum level (around 0.5 bar absolute). Before the continuous operation starts with step 1 the following 2 steps must occur for one time only at start-up.

### Step-A-

Both on-off valves (S1, S2) are closed, the second three-way valve (3W2) allows hot water, the first (3W1) allows cold water to flow in, if cold water pump (PC) is operated (or preventing hot water from flowing in); the hot water pump (PH) is turned on, the cold water pump (PC) is turned off, desorption occurs in (G2) releasing the gas from the activated carbon and increases the pressure in the condenser due to gas build up and heat.

### Step-B-

Both on-off valves (S1, S2) are closed, the second three-way valve (3W2) allows cold water, the first (3W1) allows hot water, the hot water pump (PH) is turned on, the cold water pump (PC) is turned on, the second generator (G2) gets cooled and depressurized getting ready to receive gas and the first generator (G1) is heated and is getting ready for adsorption.

Then it is come to step 1 in the continuous operation.

Briefly, in the present invention; three-way valves (3W1, 3W2) and on-off valves (S1, S2) are open and closed consecutively so that the adsorbent with the refrigerant in one of the two generators (G1, G2) release the refrigerant gas by heat from the collector (E.S.C.), the refrigerant enters condenser (C) via one of the non return valves (N1, N2) to get condensed and then flow into the expansion valve (E.V.) and said evaporator (E); while at the same time the other of two generators is cooled down so that adsorbent in it start the adsorption process which make the refrigerant in the evaporator (E) under go a phase transition and absorb the heat from the passing humid air to effect condensation of its humidity.

The on-off valves (S1, S2) are opened and closed consecutively so that a mass transfer between the two generators (G1, G2) occur in an intermediate step to increase cycle efficiency; furthermore, the on-off valves (S1, S2) are opened and closed at the start up of the system to reach a continuous operation procedure in short time.

### Detailed Description of Generator Embodiment

The generator is group of coaxial tubes filled with activated carbon and immersed in water reservoir allowing the carbon to heat and cool in an effective and fast way. Also the generator allows the gas to be desorbed and be adsorbed at the larges possible contact area between gas and carbon. The water content of this generator is as low as possible.

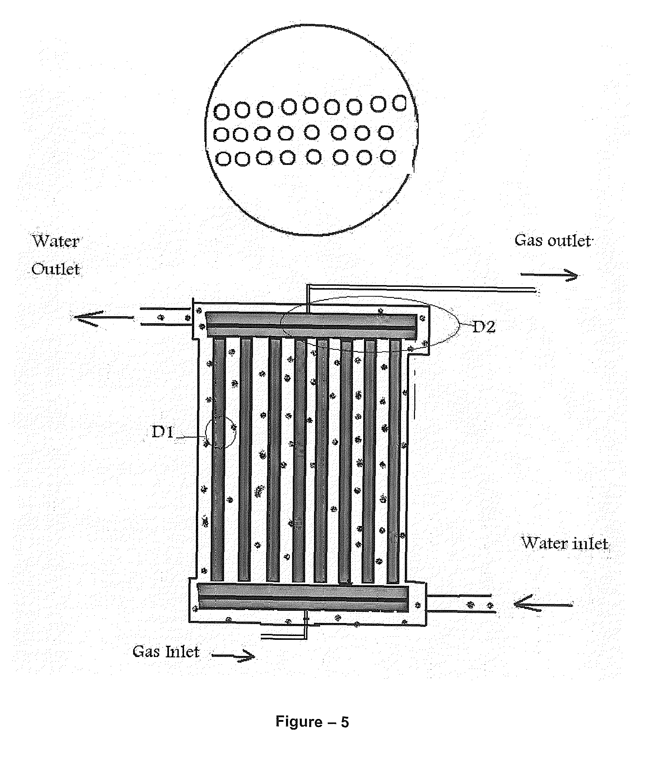

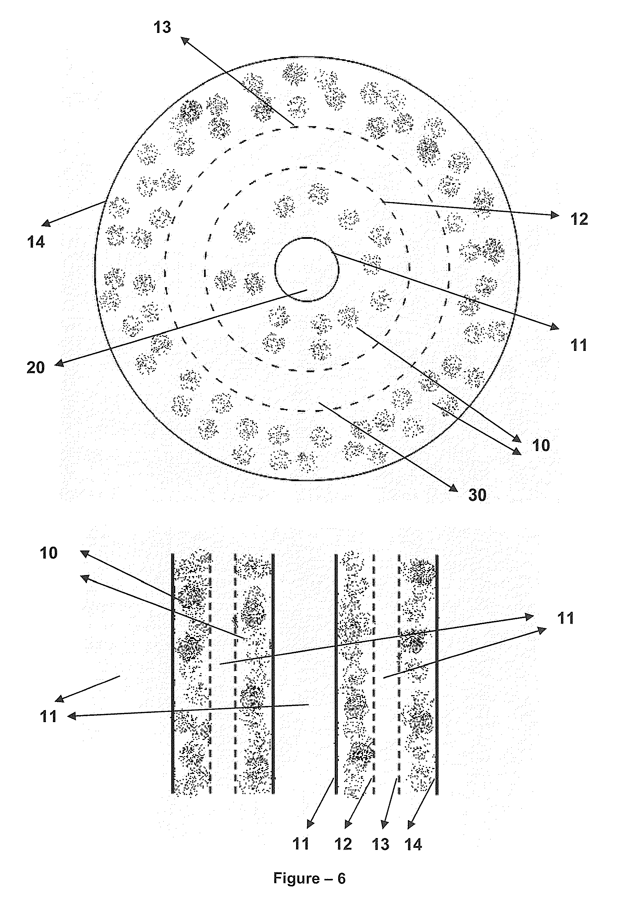

The tested design of the generator to achieve its goals is shown in Figures 5, 6, and 7. Each of the two generators contains of group of coaxial tubes (i.e., copper tubes) at a length suitable to needed capacities. The figure 6 is the enlargement of section D1 from figure 5 which gives the basic configuration of the generator. It is seen, from the figure 6, that the activated carbon (10) is filled between the inner tube (11) and inner perforated tube (12) which is around the inner tube (11).

Also, there is an outer perforated tube (13) which is around the other perforated tube (12). The outer tube (14) is used to cover the tubes (11, 12, 13) mentioned above. Between, the outer tube (14) and outer perforated tube (13), there exists another activated carbon (10) layer. The refrigerant gas (30) (ether) is passed through the gap between two perforated tubes (12, 13). The water (20) flows through the inner tube (11) and around the outer tube (14). The activated carbon area is thin enough to allow good heat transfer between the walls of the inner and outer tubes (11, 14) and the carbon (10). Also, the gap between perforated tubes (12, 13) is small to allow gas to pressurize easily and to reduce the dead space for the gas. The tubes (11, 12, 13, 14) in the generator are thermally conductive.

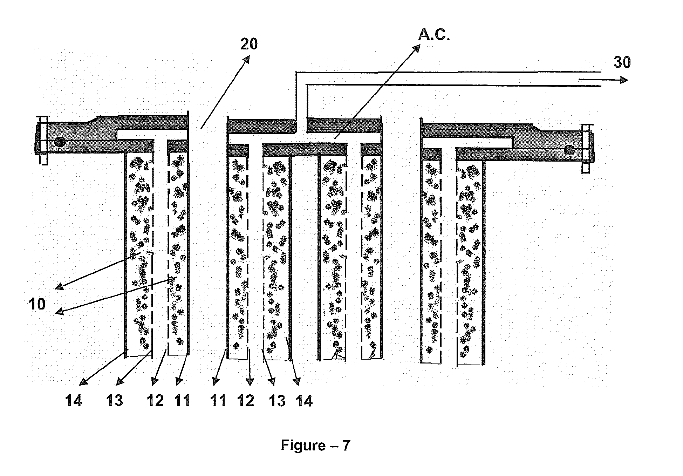

Figure 7 shows the enlargement of section D2 from figure 5. It represents the end portions (inlet and outlet) of the generator. It shows the multiple gaps connected to a tube for refrigerant gas (30) flows and multiple inner and outer tubes (11, 14) connected to a tube for water (20) flow in the generator. The said end portions are used to inlet and outlet for gas and water flow in the generator. The end portions of each generators contains an accumulation chamber (A.C.) of said refrigerant; the coaxial tubes forms heat transfer surface to cold or from hot water flowing around the outer tube (14) and inside the inner tube (11).

## Claims

1. A system for water generation from air comprising;
an adsorption unit, performing a heat operated refrigeration cycle, for water generation by cooling air to condense the humidity in the air and to accumulate that in a container;
a solar collector with evacuated tubes (E.S.C.) providing the hot water for the adsorption unit;
a radiator (R), as a heat sink of the system, to dissipate heat to the atmosphere; and providing cold water for the adsorption unit;
a water filtration unit processing the condensed water from the adsorption unit to eliminate any bacteria which might contain, also filtering and mineralizing the water;
a hot water circulation pump (PH) for said solar collectors (E.S.C.); a cold water circulation pump (PC) for said radiator (R);
a controller unit of the system;
a source of electricity to operate the system;
said system is **characterized in that** the adsorption unit, utilizing ether as refrigerant, comprises;
● two generators (G1, G2), filled with activated carbon as adsorbent, and connected to each other by refrigerant flow line where an on-off valve (S2) is located, said generators (G1, G2) having hot water outlets connected to said circulation pump (PH), cold water outlets connected to said circulation pump (PC), hot and cold water inlets from two three-way valves, and refrigerant inlets and outlets;
● a condenser (C) unit firstly connected to a junction coming from two refrigerant flow lines of non-return valves (N1, N2) which are on outlets of the generators (G1, G2); secondly connected to an on-off valve (S1) whose flow line extends to an expansion valve (E.V);
● an evaporator (E) unit firstly connected to the expansion valve (E.V); secondly connected to a junction coming from two refrigerant flow lines of non-return valves (N3, N4) which are on the other outlets of the generators (G1, G2);
● a fan unit for cold air blowing from the evaporator (E) to the condenser (C);
● two three-way valves (3W1, 3W2) that allow either hot water or cold water to enter the generators (G1, G2); first one (3W1) is connected to the first generator (G1), the second one (3W2) is connected to the second generator (G2); also both (3W1, 3W2) are either connected to cold water line coming from the radiator (R) or hot water line coming from the solar collector with evacuated tubes (ESC);
● a coil, between the condenser (C) and the evaporator (E), connected to cold water line coming from the radiator (R); and connected to said three-way valves (3W1, 3W2)
**in that** the adsorption unit generates the water from the humidity in the air accumulated on the cooled outer surface of the evaporator (E), by means of the refrigeration cycle in adsorption unit.

2. A method according to claim 1, wherein refrigeration cycle has a start-up operation in a condition that both generators (G1, G2) are at atmospheric temperature and of equal vacuum level and said start-up operation comprises the following steps where
i. on-off valves (S1, S2) are closed, second three-way valve (3W2) allows hot water, first three-way valve (3W1) allows cold water to flow in, if cold water pump (PC) is operated (or preventing hot water from flowing in); hot water circulation pump (PH) is turned on, cold water circulation pump (PC) is turned off, desorption occurs in the second generator (G2) releasing the gas from the activated carbon and increases the pressure in the condenser due to gas build up and heat;
ii. on-off valves (S1, S2) are closed, second three-way valve (3W2) allows cold water, first three-way valve (3W1) allows hot water, hot water circulation pump (PH) and cold water circulation pump (PC) are turned on, the generator (G2) is cooled and depressurized getting ready to receive refrigerant and first generator (G1) is heated and getting ready for adsorption.

3. A method according to claim 2, wherein, after said start-up, refrigeration cycle has a continuous and repeated operation with the following steps;
i. in the first step; the first valve (S1) is open and second valve (S2) is closed; the hot water pump (PH) and cold water pump (PC) are turned on, the first three-way valve (3W1) allows hot water to flow to generator (G1) (initially filled with refrigerant) while second three-way valve (3W2) allows cold water to flow to the other generator (G2) that is initially empty (or at low level) of refrigerant; since first generator (G1) is pressurized due to heat then the refrigerator will be desorbed from the activated carbon and flows through the first non return valve (N1); the third non-return valve (N3) prevents refrigerant from flowing in the other direction and second non-return valve (N2) prevents the refrigerant from going to second generator (G2) which is at vacuum, then the refrigerant goes to the condenser (C) where the refrigerant condenses due to the low temperature of air flowing from the evaporator (E); then the refrigerant flows through the expansion valve (E.V.) evaporates in evaporator (E) at low temperature depends on the level of condensation needed; finally the refrigerant will then be adsorbed in second generator (G2);
ii. in the second step, the first on-off valve (S1) is closed, the second one (S2) is open, the pumps (PH, PC) are turned off to allow flowing of residual gases from first generator (G1) to second generator (G2) through the second valve (S2); and this step takes time until the pressure in both generators (G1, G2) equalizes;
iii. in the third step, both on-off valves (S1, S2) are closed; the pumps (PH, PC) are turned on; first three-way valve (3W1) allows cold water and second three-way valve (3W2) allows hot water; and this step takes time until the pressure in first generator (G1) comes to vacuum level, and pressure in second generator (G2) rises above atmospheric pressure;
iv. in the fourth step; first on-off valve (S1) is open, second on-off valve (S2) is closed, the pumps (PH, PC) are turned on, first three-way valve (3W1) allows cold water and second three-way valve (3W2) allows hot water; in this step the refrigerant flows from the second generator (G2) through the second non-return valve (N2) to the condenser (C), through the first one-off valve (S1) to the expansion valve (E.V) to the evaporator (E), through the third non-return valve (N3) to the first generator (G1);
v. in the fifth step, second step is repeated;
vi. in the sixth step, both on-off valves (S1, S2) are closed; the pumps (PH, PC) are turned on; first three-way valve (3W1) allows hot water and second three-way valve (3W2) allows cold water;

4. A system according to claim 2; wherein the said generator comprises a group of coaxial tubes filled with activated carbon and immersed in water reservoir allowing the carbon to heat and cool.

5. A system according to claim 4; wherein the said generator comprises the activated carbon (10) which is filled between an inner tube (11) and an inner perforated tube (12) which is around the inner tube (11); an outer perforated tube (13) is around the other perforated tube (12); an outer tube (14) which is used to cover the said tubes (11, 12, 13); another activated carbon (10) layer between the outer tube (14) and outer perforated tube (13); an accumulation chamber (A.C.), for the refrigerant, at the inlet and outlet of the generator.

6. A system according to claim 5; wherein the refrigerant gas (30) is passed through the gap between two perforated tubes (12, 13); water (20) flows through the inner tube (11) and around the outer tube (14) in the generator.

7. A system according to claim 1; wherein the source of electricity comprises at least a photo voltaic unit.
